# FASCICULE DE BREVET EUROPEEN

(11) **EP 0 700 254 B1**
(45) Date de publication et mention de la délivrance du brevet: **08.11.2000**
(21) Numéro de dépôt: 95912993.3
(22) Date de dépôt: 27.03.1995
(51) Int. Cl.: A23L 1/211

(54) **PROCEDE DE PREPARATION DE PRODUIT DE SOJA FINEMENT DIVISE**
VERFAHREN ZUR HERSTELLUNG EINES FEINVERTEILTEN SOYABOHNENPRODUKTES
METHOD FOR PREPARING A FINELY DIVIDED SOYA BEAN PRODUCT

(30) Priorité: 28.03.1994 EP 94104840
(43) Date de publication de la demande: 13.03.1996
(73) Titulaire: SOCIETE DES PRODUITS NESTLE S.A., 1800 Vevey (CH)
(72) Inventeur: BEUTLER, Ernest, CH-3550 Langnau (CH); BODENSTAB, Stefan, CH-3510 Konolfingen (CH); GREDT-VOGEL, Brigitte, CH-3005 Bern (CH); GROUX, Michel, CH-3438 Lauperswil (CH); KUSLYS, Martina, CH-3506 Grosshöchstetten (CH); MARWOOD, Peter, CH-1860 Aigle (CH); SCHWAN, Michael, CH-3507 Biglen (CH)
(74) Mandataire: Thomas, Alain
(86) Numéro de dépôt international: CH9500066
(87) Numéro de publication internationale: WO9526144

(56) Documents cités:
- EP-A- 0 479 596
- FR-A- 2 013 753
- FR-A- 2 165 191
- FR-A- 2 366 798
- US-A- 3 941 890
- US-A- 4 119 733
- US-A- 4 409 256
- PATENT ABSTRACTS OF JAPAN vol. 186 no. 62 (C-1287) ,14 Décembre 1994 & JP,A,06 261706 (HITACHI LTD.) 20 Septembre 1994,
- PATENT ABSTRACTS OF JAPAN vol. 134 no. 14 (C-635) ,13 Septembre 1989 & JP,A,01 153056 (TOSHIICHI HARADA) 15 Juin 1989,
- PATENT ABSTRACTS OF JAPAN vol. 124 no. 46 (C-546) ,24 Novembre 1988 & JP,A,63 169973 (MITSUBISHI CASEI CORP.) 13 Juillet 1988,

## Description

La présente invention a trait à un procédé de préparation d'un produit de soja finement divisé et hydraté incorporant la totalité des composants de la fève de soja dépelliculée, destiné à être utilisé comme ingrédient nutritionnel dans des produits alimentaires tels que boissons nutritionnelles et succédanés de lait ou comme ingrédient fonctionnel, par exemple dans les crèmes glacées.

Le brevet US 4409256 décrit un procédé d'obtention d'un lait de soja dans lequel des fèves entières, non dépelliculées, sont soumises à une mouture à sec, on ajoute de l'eau pour former une bouillie, on traite thermiquement cette bouillie à la vapeur pour inactiver les facteurs anti-trypsine, on effectue un refroidissement avec évaporation d'eau (flash) si le procédé est mis en oeuvre de façon discontinue, ou par échangeur de chaleur s'il est mis en oeuvre de façon continue.La suspension est alors centrifugée pour séparer les pellicules et on sèche le produit obtenu.

Le brevet US 4194018 décrit un procédé d'obtention d'une suspension aqueuse de soja dans lequel des fèves de soja dépelliculées subissent une première mouture grossière en présence d'eau, un traitement thermique à la vapeur pour inactiver les facteurs anti-trypsine, un refroidissement avec évaporation (flash) et une seconde mouture fine. On obtient alors une suspension aqueuse de soja finement divisé sans nécessité de séparation d'un résidu incorporant les insolubles.

Par rapport aux procédés existants de préparation de lait de soja dans lesquels on a toujours une étape de séparation des insolubles, les deux procédés précités permettent d'utiliser toute la fève de soja, sans en rejeter le résidu non solubilisé, ce qui permet un gain nutritionnel et économique appréciable. Cependant, dans le procédé selon le brevet US 4,409,256, le fait d'opérer avec des fèves entières, non dépelliculées, nécessite une obligation de dépelliculer après le traitement thermique, ce qui conduit à une perte substantielle, lors de cette opération, d'autres composants. D'autre part, le procédé selon le brevet US 4,194,018 oblige à une seconde mouture après le traitement thermique avec un moulin à billes qui est très onéreux.

Comme on le voit, l'obtention de ces produits de soja finement divisé du type lait de soja pose un problème non encore résolu par l'art antérieur. Il est souhaitable de pouvoir utiliser la totalité de la fève de soja, pellicule exceptée, mais en essayant de minimaliser les pertes de fractions nutritionnellement intéressantes et en diminuant le coût de production, tout en gardant une texture parfaitement lisse et un goût agréable non oxydé.

La présente invention a pour objet de résoudre ce problème, et décrit un procédé de préparation en continu d'un produit de soja finement divisé et hydraté incorporant la totalité des composants de la fève de soja dépelliculée, dans lequel :
a) on dépellicule à sec les fèves de soja,
b) on moud en présence d'eau chaude en continu lesdites fèves en un temps court,
c) on traite thermiquement cette mouture à une température comprise entre 148°C et 170°C pendant une durée comprise entre 5 s et 3 min de manière à obtenir une suspension, le temps minimal de maintien à 148°C étant de 30 s et le temps de maintien minimal à des températures plus élevées étant plus court et
d) on passe instantanément cette suspension à travers une vanne de contre-pression où elle subit une évaporation instantanée de vapeur.

Il est bien entendu que selon l'invention, on fait le traitement thermique à une température et pendant une durée qui n'ont pas de conséquences négatives sur les caractéristiques organoleptiques. A 148°C, on opère de préférence entre 30 s et 3 min.

S'agissant de la limite supérieure en température, elle n'est pas critique et n'est limitée que par les conséquences organoleptiques.

On opère de préférence à une température allant jusqu'à 170°C, auquel cas la durée minimum de traitement est d'environ 5 s.

L'opération de dépelliculage à sec est importante et il faut la mettre en oeuvre avec le minimum d'endommagement des deux cotylédons, car elle est rédhibitoire pour l'obtention d'une suspension lisse et non râpeuse sur la langue.

Dans une deuxième étape, on effectue la mouture de la matière première en présence d'eau, comprenant des fèves de soja dépelliculées. Cette mouture se fait à une température de 60-100°C, avec un rapport soja:eau de 1:3 à 1:10, et à un pH de 2,5 à 8,5. La mouture se fait de préférence à une température supérieure à 80°C, par exemple entre 85 et 95°C en une durée de 10 s, de préférence de 3 à 4 s. Le rapport soja:eau est limité dans sa fourchette inférieure pour permettre d'obtenir une solution pompable et dans sa fourchette supérieure, car la solution serait trop liquide et donnerait une teneur en protéines trop basse. Les moulins utilisés sont des moulins à dents et des moulins colloïdaux, et permettent l'obtention d'une suspension dans laquelle 50% des particules sont inférieures à 200µm et 90% ne dépassent pas 700µm. On peut éventuellement faire suivre cette première mouture grossière d'une seconde réduction plus fine amenant 90% des particules à une taille inférieure à 500µm. On utilise dans ce cas également un moulin colloïdal.

Cette opération permet d'inactiver les lipoxygénases de la fève du fait de la chaleur apportée par l'eau, ce qui permet d'éviter le développement de tout goût caractéristique résultant d'une action de ces lipoxygénases sur les acides gras insaturés contenus dans la matière grasse de la fève de soja.

Dans une troisième étape, on fait subir à la suspension un traitement thermique. Le chauffage peut être direct ou indirect, et porte la suspension à une température de 150 à 155°C pendant une durée de 20-30 secondes. Le chauffage est de préférence direct et on porte la suspension à une température de 150°C. Cette étape permet une hydratation complète de la suspension et un ramollissement des particules. Pendant ce traitement thermique, la viscosité de la suspension augmente, ce qui favorise la mouture qui est réalisée dans l'étape suivante. On peut par exemple réaliser cette étape dans un dispositif d'upérisation classiquement utilisé pour le lait, dans lequel on injecte la vapeur sous une pression suffisamment élevée pour permettre l'injection dans la suspension, suivi d'un tube de maintien à température. L'étape d'upérisation conduit aussi à une inactivation des facteurs anti-trypsine du soja.

Dans une quatrième étape, on passe instantanément la suspension à travers une vanne de contre-pression dans une chambre à pression réduite par rapport à la pression de la suspension à l'entrée. La suspension subit une évaporation instantanée de vapeur (flash), ce qui augmente le volume de la suspension. Du fait de l'évaporation instantanée de l'eau absorbée à l'étape d'injection de vapeur, les particules de soja subissent une désintégration. Le fait d'augmenter le volume de la suspension on passant à travers la vanne de contre-pression augmente brutalement la friction et alors conduit à une mouture de la suspension dans la vanne de contre-pression. Des particules surchauffées peuvent aussi être désintégrées à la sortie de la vanne de contre-pression par un éclatement à cause d'une évaporation rapide de la vapeur. La combinaison du chauffage et du flash joue alors le rôle d'une étape de mouture. On obtient ainsi une suspension très fine et hydratée, dans laquelle 50% des particules ont une dimension inférieure à 60µm, et 90% inférieure à 90µm. Cette désintégration des particules de la suspension totalement hydratée, ainsi que le ramollissement de ces particules, permet un lissage (absence de caractère sableux en bouche) de ladite suspension.

Le fait de l'expansion de vapeur on passant à travers la vanne de contre-pression refroidit la suspension jusqu'à 50 à 120°C, selon la température du flash. On peut en plus refroidir la suspension à une température comprise entre 4 et 60°C.

Comme la suspension ayant subi le traitement thermique par injection de vapeur est stérile, elle peut, après refroidissement sous conditions stériles, être remplie aseptiquement à une température comprise entre 4 et 60°C, telle quelle, soit seule, soit on mélange, par exemple avec du lait de vache stérilisé, sans qu'il soit nécessaire de procéder à une quelconque opération supplémentaire.

Cette suspension trouve une utilisation soit dans les yoghourts, dans les crèmes glacées ou dans des boissons, en particulier celles à base de lait; ladite suspension y est ajoutée on quantité souhaitée. Par exemple, pour les crèmes glacées, on l'ajoute de manière à remplacer environ 25% du lait de vache écrémé. Cette addition est faite pour deux raisons: soit pour apporter la teneur en protéines du soja, soit pour le caractère stabilisant de la suspension obtenue selon le procédé de l'invention.

La suspension obtenue selon le procédé de l'invention inclut le résidu non solubilisé mais hydraté et ramolli. Si on souhaitait obtenir du lait de soja en poudre, la présence du résidu a une conséquence néfaste, en raison du fait que les constituants dudit résidu lient très fortement l'eau. L'élimination de cette eau est classiquement réalisée dans des évaporateurs tubulaires, puis le séchage proprement dit est effectué dans une tour de séchage par pulvérisation. Or, les constituants du résidu retiennent l'eau si fortement que l'on ne peut guère atteindre une teneur en matière sèche supérieure à 18% en sortie d'évaporateur, ce qui entraîne des coûts de séchage prohibitifs pour obtenir une poudre de ce produit.

On a constaté que l'on pouvait résoudre le problème si on effectue une hydrolyse enzymatique de la suspension obtenue selon le procédé décrit ci-dessus.

Les hydrates de carbone de la suspension sont principalement des polysaccharides, du type celluloses, hémicelluloses, lignines et pectines. On utilise donc des enzymes dégradant ces polysaccharides, du type cellulases, hémicellulases, pectinases, amylases, endo-glucanases, pectin-lyase, endo-polygalacturonases, pectin-esterases, endo-arabinases, β-1,4-galactanases, endoxylanases, arabinofuranosidases. De plus, l'expérience montre que les protéines jouent également un rôle dans les phénomènes de rétention d'eau et de viscosité élevée. On peut donc utiliser un mélange comprenant à la fois des enzymes dégradant les polysaccharides et des protéases. On peut faire agir les enzymes en une seule étape, ou successivement. Les conditions d'hydrolyse (température, pH, durée d'hydrolyse, et concentration en enzyme) sont choisies en fonction des enzymes utilisées et des caractéristiques désirées du produit (une hydrolyse plus poussée donnera un produit moins visqueux). L'hydrolyse enzymatique est stoppée par inactivation thermique des enzymes, en soumettant la suspension à une température de 90-150°C pendant 5s à 2 min. On a constaté, finalement, qu'on pouvait améliorer encore l'évaporabilité de l'eau dans la suspension de soja en ajoutant un émulsifiant soit avant l'étape de mouture, soit avant ou après l'hydrolyse enzymatique. Cette addition se fait à une teneur comprise entre 0,5 et 4% dudit émulsifiant par rapport à la matière sèche. Cet émulsifiant est choisi parmi les monoglycérides purifiées, de préférence les monoglycérides anionique.

Le produit peut être conditionné sous forme liquide, soit en produit frais, soit dans un conditionnement aseptique. On peut alors l'utiliser soit seul, soit en mélange avec du sucre et du lait, soit sous forme de boisson nutritionnelle contenant des vitamines, des sels minéraux et autres.

Le produit obtenu peut également être séché, dans un dispositif classique combinant évaporateur et tour de séchage par pulvérisation. Du fait de l'hydrolyse des constituants responsables de la rétention d'eau, on peut évaporer jusqu'à des teneurs en matière sèche de 18-40%, ce qui permet le séchage par pulvérisation dans des conditions économiquement favorables. Il peut être conditionné soit seul, soit en mélange avec du sucre et du lait, soit pour en faire une boisson nutritionnelle.

Le produit obtenu contient tous les composants de la fève de soja dépelliculée. Il permet ainsi l'élaboration de boissons diététiques (type lait de soja) à haute teneur en fibres hydrolysées, tout en gardant d'excellentes caractéristiques physiques et organoleptiques : viscosité idéale, bonne dissolution de la poudre dans les liquides froids ou chauds, absence de texture sableuse en bouche. On obtient une boisson ayant un caractère lisse en bouche et stable à la conservation. Cette poudre trouve également une utilisation comme additif dans les yoghourts et les crèmes glacées.

On peut également, selon l'invention, traiter la pulpe de soja obtenue par fabrication de lait de soja. Dans ce cas, on traite thermiquement cette pulpe à une température supérieure à 148°C, le temps minimal de maintien à 148°C étant de 30 s et le temps minimal de maintien à des températures plus élevées étant plus court et on passe instantanément cette pulpe à travers une vanne de contre-pression. Le traitement thermique et l'étape flash est donc la même que pour la fève de soja. Ce qui a été dit précédemment pour le traitement thermique reste valable aussi pour la pulpe de soja.

L'invention est illustrée plus en détail dans les exemples de réalisation suivant.

### Exemple 1

On réalise la mouture de fèves de soja dépellicullées en présence d'eau préalablement portée à une température de 90°C, dans un rapport soja:eau de 1:5,7 pendant 5 s. Cette suspension est ensuite passée dans un dispositif d'injection directe de vapeur, où elle est portée instantanément à 150°C. Elle passe alors dans le tube de maintien à température sous une pression de 5.7 bars pendant 30s. La suspension passe alors instantanément à travers une vanne de contre-pression et entre dans la chambre sous pression réduite (0,16 bar). Ce traitement conduit à une réduction de la taille des particules et à une structure lisse de la suspension. Elle se refroidit instantanément à 55°C, par l'évaporation-flash.

Des échantillons pris en sortie de moulin et en sortie de chambre à vide montre les caractéristiques suivantes :

| Echantilion | Sortie moulin | Sortie chambre à vide |
|---|---|---|
| 50% particules de diamètre inférieur à | 140µm | 37.5µm |
| 90% particules de diamètre inférieur à | 650µm | 85µm |

### Exemple 2

On reprend les conditions de l'exemple 1, à l'exception de l'étape de mouture, qui est réalisée en deux temps: première mouture grossière suivie d'une mouture colloïdale.

Le tableau suivant donne les caractéristiques de la suspension obtenue:

| Echantillon | Sortie 1° moulin | Sortie 2° moulin | Sortie chambre à vide |
|---|---|---|---|
| 50% particules de diamètre inférieur à | 165µm | 165µm | 40µm |
| 90% particules de diamètre inférieur à | 600µm | 460µm | 85µm |

On procède ensuite dans les mêmes conditions que dans l'exemple 1. Les produits obtenus ne présentent aucune différence comparés à ceux de cet exemple.

### Exemple 3

On reprend les mêmes conditions que dans l'exemple 1, à l'exception que le traitement thermique est fait à 170°C pendant 5 s.

Le tableau suivant donne les caractéristiques de la suspension obtenue.

| Echantillon | Sortie moulin | Sortie chambre à vide |
|---|---|---|
| 50% particules de diamètre inférieur à | 176µm | 42µm |
| 90% particules de diamètre inférieur à | 641µm | 83µm |

### Exemple 4

On prend une partie de la suspension de l'exemple 1 comme échantillon témoin. Le reste de la suspension est divisé en 3 lots A, B, C. On prépare également 2 mélanges d'enzymes: - mélange PROT contentant un mélange de protéases - mélange POLYS contenant un mélange d'enzymes dégradant les polysaccharides. Le tableau suivant résume les traitements enzymatiques des différents échantillons de suspension:

| □ Lot | Enzymes | pH | Durée (min) Température | Température |
|---|---|---|---|---|
| A | PROT | 6.7 | 20 | 55°C |
| B | PROT+POLYS | 6.8 | 20 | 55°C |
| C | Deux étapes: | | | |
| | 1) POLYS | 6.7 | 20 | 55°C |
| | 2) PROT | 6.7 | 20 | 55°C |
| Témoin | | | | |

Les quantités d'enzymes utilisées sont de 0,1% pour POLYS et 0.05% pour PROT (% d'enzyme pur par rapport à la matière sèche de la suspension).

L'inactivation des enzymes dans chaque lot est effectuée par un traitement thermique de 10 s à 110°C.

Le tableau suivant résume la comparaison des viscosités des différents échantillons à ce stade:

| Lot | Viscosité |
|---|---|
| A | élevée |
| B | faible |
| C | faible |
| Témoin | élevée |

La teneur en matière sèche des différents lots est de 14% après l'hydrolyse. Chaque lot est alors envoyé dans un évaporateur. Le tableau suivant montre les teneurs en matière sèche obtenues en sortie d'évaporateur:

| Lot | TS obtenu en sortie d'évaporateur |
|---|---|
| A | 18% |
| B | 26% |
| C | 26% |
| Témoin | 18% |

On effectue alors le séchage par pulvérisation des différents échantillons, et on reconstitue la poudre obtenue dans l'eau. Le tableau suivant résume les caractéristiques de la boisson obtenue:

| Lot | Caractéristiques de la boisson reconstituée |
|---|---|
| B et C | - excellente texture en bouche |
| | - excellente dissolution |
| Témoin | - texture épaisse et sableuse |
| | - mauvaise dissolution: taches blanches sur la paroi du verre |

### Exemple 5

On reprend la pulpe de soja comme obtenue par la production d'un lait de soja. On redilue cette pulpe à une teneur matière sèche de 6%. Cette suspension est ensuite passée dans un dispositif d'injection directe de vapeur, où elle est portée à 150°C. Elle passe alors dans le tube de maintien à température sous une pression de 5,7 bar pendant 30 s. La suspension passe alors instantanément à travers une vanne de contre-pression et entre dans la chambre sous pression réduite (0,16 bar). Ce traitement conduit à une réduction de la taille des particules et une structure lisse de la suspension. La suspension refroidit à 55°C, par l'évaporation-flash.

On obtient un produit ayant les caractéristiques suivantes:

| Echantillon | Pulpe après redilution dans l'eau | Sortie chambre à vide |
|---|---|---|
| 50% particules de diamètre inférieur à | 153µm | 40µm |
| 90% particules de diamètre inférieur à | 585µm | 88µm |

### Exemple 6

Cet exemple décrit la préparation d'une crème glacée où la partie lait est partiellement remplacée par du soja.

On prépare une suspension comme décrit dans l'exemple 1. Cette suspension est alors utilisée directement et incorporée dans le mélange liquide de la crème glacée dans les proportions suivantes:

| ingrédient | recette sans soja | recette avec soja |
|---|---|---|
| | (%) matière sèche | (%) matière sèche |
| poudre de lait écrémé | 10 | 7 |
| suspension de soja | ./. | 3 |
| autres ingrédients (graisse, poudre de sérum du lait, sucres, émulsifiants et stabilisants) | 25 | 25 |
| eau | 65 | 65 |
| | 100 | 100 |

Ce mélange est ensuite surgelé et on obtient une crème glacée à base de lait et de soja.

Comparée à la recette sans soja, la crème glacée ainsi préparée montre une structure plus riche et une stabilité pendant stockage améliorée.

### Exemple 7

Cet exemple décrit la préparation d'une crème glacée où la partie lait est partiellement remplacée par la pulpe du soja.

On prépare une suspension comme décrit dans l'exemple 5. Cette suspension est alors utilisée directement et incorporée dans le mélange liquide de la crème glacée dans les proportions suivantes:

| ingrédient | recette sans soja | recette avec soja |
|---|---|---|
| | (%) matière sèche | (%) matière sèche |
| poudre de lait écrémé | 10 | 9 |
| suspension de soja | ./. | 1 |
| autres ingrédients (graisses, poudre du sérum du lait, sucres, arômes, émulsifiants et stabilisants) | 25 | 25 |
| eau | 65 | 65 |
| | 100 | 100 |

Ce mélange est ensuite surgelé et on obtient une crème glacée à base du lait et du soja.

Comparée à la recette sans soja, la crème glacée ainsi préparée montre une structure plus riche et une stabilité pendant stockage améliorée.

### Exemple 8

Cet exemple décrit la préparation d'une boisson nutritionnelle à base de fèves entières de soja dépelliculées et son remplissage aseptique.

On moud les fèves de soja dépelliculées en présence d'une solution, contenant tous les autres ingrédients préalablement portée à une température de 90°C, dans un rapport soja:eau de 1:5,7 pendant 5 s. Cette suspension est ensuite passée dans un dispositif d'injection directe de vapeur, où elle est portée à 150°C. Elle passe alors dans le tube de maintien à température sous une pression de 5,7 bar pendant 30 s. La suspension passe alors instantanément à travers une vanne de contre-pression et entre dans la chambre sous pression réduite (0,16 bar). Ce traitement conduit à une réduction de la taille des particules et une structure lisse de la suspension. La suspension est refroidie à 55°C, par l'évaporation flash.

| ingrédient | recette |
|---|---|
| | (%) matière sèche |
| soja | 5 |
| autres ingrédients (graisses, sucres, arômes, émulsifiants et stabilisants) | 10 |
| eau | 85 |
| | 100 |

Comme cette boisson ayant subi le traitement thermique par injection de vapeur est stérile, elle est après refroidissement sous conditions stériles, remplie aseptiquement.

### Exemple 9

Cet exemple décrit la préparation d'une boisson nutritionnelle en poudre à base de lait de vache et de soja.

On prépare une suspension comme décrit dans l'exemple 1. Cette suspension est alors mélangée avec tous les autres ingrédients et ensuite séchée par atomisation. On obtient une boisson nutritionnelle en poudre.

| ingrédient | composition de la poudre sans soja | composition de la poudre avec soja |
|---|---|---|
| | (%) matière sèche | (%) matière sèche |
| lait de vache | 60.6 | 33.8 |
| soja | ./. | 23.0 |
| autres ingrédients (sucres, arômes, stabilisants et émulsifiants) | 36.4 | 40.2 |
| eau | 3 | 3 |
| | 100 | 100 |

## Revendications

1. Procédé de préparation d'un produit de soja finement divisé, dans lequel :
a) on dépellicule à sec les fèves de soja,
b) on moud en présence d'eau chaude en continu lesdites fèves en un temps court,
c) on traite thermiquement cette mouture à une température comprise entre 148°C et 170°C pendant une durée comprise entre 5 s et 3 min de manière à obtenir une suspension, le temps minimal de maintien à 148°C étant de 30 s et le temps minimal de maintien à des températures plus élevées étant plus court,
d) on passe instantanément cette suspension à travers une vanne de contre-pression où elle subit une évaporation instantanée de vapeur.

2. Procédé selon la revendication 1, caractérisé en ce que le mouturage a lieu avec de l'eau à une température supérieure à 80°C et dure 10 s, de préférence 3 à 4 s.

3. Procédé selon l'une des revendications 1 ou 2, caractérisé en ce que le traitement thermique est effectué par injection de vapeur à une température comprise entre 150 et 155°C pendant 20-30 s.

4. Procédé selon l'une des revendications 1 à 3, caractérisé en ce que l'étape de mouture b) comprend en outre une étape de mouture fine.

5. Procédé selon l'une des revendications 1 à 4, caractérisé en ce que la mouture est effectuée avec un rapport soja : eau de 1:3 à 1:10, et à un pH de 2,5-8,5.

6. Procédé selon l'une des revendications 1 à 5, caractérisé en ce que la suspension est refroidie à une température de 4 à 60°C.

7. Procédé selon la revendication 6, caractérisé en ce qu'on effectue un remplissage aseptique de la suspension soit seule, soit en mélange à une température comprise entre 4 et 60°C.

8. Procédé selon l'une des revendications 1 à 6, caractérisé en ce qu'on effectue une hydrolyse enzymatique de la suspension obtenue.

9. Procédé selon la revendication 8, caractérisé en ce que l'hydrolyse enzymatique est effectuée en une ou plusieurs étapes par des enzymes dégradant les polysaccharides ou un mélange d'enzymes sélectionnées dans le groupe des enzymes protéolytiques et des enzymes dégradant les polysaccharides.

10. Procédé selon l'une des revendications 8 ou 9, caractérisé en ce que l'on utilise un mélange d'enzymes comprenant au moins une enzyme dégradant les polysaccharides et au moins une enzyme protéolytique.

11. Procédé selon l'une des revendications 8 à 10, caractérisé en ce que la ou les enzymes dégradant les polysaccharides sont choisies parmi les enzymes dégradant les celluloses, les hémicelluloses et les pectines.

12. Procédé selon l'une des revendications 8 à 11, caractérisé en ce que l'on fait suivre l'étape d'hydrolyse enzymatique d'une étape de séchage de la suspension hydrolysée.

13. Suspension aqueuse de soja finement divisé incorporant la totalité des composants de la fève dépelliculée, caractérisée on ce que 50% des particules ont une taille intérieure à 60µm et 90% des particules ont une taille inférieure à 90µm, ladite suspension étant susceptible d' être obtenue par le procédé selon la revendication 1.

14. Poudre de soja finement divisé incorporant la totalité des composants de la fève dépelliculée, caractérisée on ce qu'après reconstitution dans l'eau, 50% des particules ont une taille inférieure à 60µm et 90% des particules ont une taille inférieure à 90µm, ladite poudre étant susceptible d' être obtenue par le procédé selon la revendication 1.

15. Utilisation de la suspension aqueuse selon la revendication 13, dans les yoghourts, dans les crèmes glacées, dans des boissons.

16. Utilisation de la poudre de soja selon la revendication 14 dans les yoghourts, dans des crèmes glacées, dans des boissons.

17. Procédé de préparation d'un produit de soja finement divisé, à partir de la pulpe de soja, dans lequel on traite thermiquement cette pulpe à une température supérieure à 148°C, le temps minimal de maintien à 148°C étant de 30 s et le temps minimal de maintien à des températures plus élevées étant plus court et on passe instantanément cette pulpe à travers une vanne de contre-pression.

## Claims

1. Process for the preparation of a finely divided soya product, wherein :
a) soya beans are hulled dry,
b) the said beans are milled continuously for a short period in the presence of hot water,
c) this milled material is heat treated at a temperature comprised between 148°C and 170°C for a period comprised between 5 s and 3 min so as to obtain a suspension, the minimum dwell time at 148°C being 30 s and the minimum dwell time at higher temperatures being shorter,
d) this suspension is immediately passed through a back-pressure valve where it is subjected to the instantaneous evaporation of steam.

2. Process according to claim 1, characterized in that milling takes place with water at a temperature greater than 80°C and lasts for 10 s, preferably 3 to 4 s.

3. Process according to one of the claims 1 or 2, characterized in that the heat treatment is carried out by steam injection at a temperature of between 150 and 155°C for 20-30 s.

4. Process according to one of claims 1 to 3, characterized in that the milling stage (b) additionally includes a fine milling stage.

5. Process according to one of claims 1 to 4, characterized in that milling is carried out with a soya: water ratio of 1:3 to 1:10, and at a pH of 2.5-8.5.

6. Process according to one of claims 1 to 5 characterized in that the suspension is cooled to a temperature of 4 to 60°C.

7. Process according to claim 6, characterized in that aseptic filling of the suspension is carried out, either alone, or in a mixture at a temperature of between 4 and 60°C.

8. Process according to one of claims 1 to 6, characterized in that enzyme hydrolysis is carried out on the suspension obtained.

9. Process according to claim 8, characterized in that enzyme hydrolysis is carried out in one or more stages by enzymes degrading polysaccharides or a mixture of enzymes selected from the group of proteolytic enzymes and of enzymes degrading polysaccharides.

10. Process according to either of claims 8 or 9, characterized in that a mixture of enzymes is used comprising at least one enzyme degrading polysaccharides and at least one proteolytic enzyme.

11. Process according to one of claims 8 to 10, characterized in that the enzyme or enzymes degrading polysaccharides is or are selected from enzymes degrading celluloses, hemicelluloses and pectins.

12. Process according to one of claims 8 to 11, characterized in that the enzyme hydrolysis stage is followed by a drying stage of the hydrolysed suspension.

13. Aqueous suspension of finely divided soya incorporating all the components of the hulled bean, characterized in that 50% of particles have a size less than 60 µm and 90% of particles have a size less than 90 µm, it being possible to obtain the said suspension by the process according to claim 1.

14. Finely divided soya powder incorporating all the components of the hulled bean, characterized in that following reconstitution in water, 50% of the particles have a size less than 60 µm and 90% of particles have a size less than 90 µm, it being possible to obtain the said powder by the process according to claim 1.

15. Use of the aqueous suspension according to claim 13, in yoghurts, in ice creams and in beverages.

16. Use of the soya powder according to claim 14 in yoghurts, in ice creams and in beverages.

17. Process for the preparation of a finely divided soya product, from soya pulp, wherein this pulp is heat treated at a temperature greater than 148°C, the minimum dwell time at 148°C being 30 s and the minimum dwell time at higher temperatures being shorter, and this pulp is immediately passed through a back-pressure valve.

## Patentansprüche

1. Verfahren zur Herstellung eines feinzerteilten Sojabohnenprodukts, bei dem:
a) man die Sojabohnen im trockenen Zustand schält,
b) man die Bohnen in der Anwesenheit von heißem Wasser kontinuierlich für eine kurze Zeit mahlt,
c) man das Mahlgut bei einer Temperatur zwischen 148°C und 170°C innerhalb eines Zeitraums von 5 s und 3 min thermisch behandelt, um eine Suspension zu erhalten, wobei die Mindestzeitdauer beim Einhalten einer Temperatur von 148°C 30 s beträgt und die Mindestzeitdauer beim Einhalten von höheren Temperaturen kürzer ist,
d) man diese Suspension sofort durch ein Gegendruckventil leitet, wo sie einer unverzüglichen Verdampfung unterworfen wird.

2. Verfahren nach Anspruch 1, dadurch gekennzeichnet, daß die Vermahlung mit Wasser bei einer Temperatur oberhalb von 80°C und für eine Dauer von 10 s, vorzugsweise von 3 bis 4 s, erfolgt.

3. Verfahren nach einem der Ansprüche 1 oder 2, dadurch gekennzeichnet, daß die thermische Behandlung mit einer Dampfinjektion bei einer Temperatur zwischen 150 und 155°C innerhalb von 20-30 s durchgeführt wird.

4. Verfahren nach einem der Ansprüche 1 bis 3, dadurch gekennzeichnet, daß die Mahlstufe b) unter anderem eine Feinmahlstufe umfaßt.

5. Verfahren nach einem der Ansprüche 1 bis 4, dadurch gekennzeichnet, daß die Vermahlung mit einem Verhältnis Sojabohnen:Wasser von 1:3 bis 1:10 und bei einem pH-Wert von 2,5-8,5 durchgeführt wird.

6. Verfahren nach einem der Ansprüche 1 bis 5, dadurch gekennzeichnet, daß die Suspension auf eine Temperatur von 4 bis 60°C abgekühlt wird.

7. Verfahren nach Anspruch 6, dadurch gekennzeichnet, daß man eine aseptische Abfüllung der Suspension entweder allein oder als Mischung bei einer Temperatur zwischen 4 und 60°C durchführt.

8. Verfahren nach einem der Ansprüche 1 bis 6, dadurch gekennzeichnet, daß man eine enzymatische Hydrolyse der erhaltenen Suspension durchführt.

9. Verfahren nach Anspruch 8, dadurch gekennzeichnet, daß die enzymatische Hydrolyse in einer oder mehreren Stufen mit Enzymen, die Polysaccharide abbauen, oder mit einer Mischung von Enzymen, die ausgewählt sind aus der Gruppe der proteolytischen Enzyme und der Enzyme, die Polysaccharide abbauen, durchgeführt wird.

10. Verfahren nach einem der Ansprüche 8 oder 9, dadurch gekennzeichnet, daß man eine Enzymmischung verwendet, die wenigstens ein Enzym, das Polysaccharide abbaut und wenigstens ein proteolytisches Enzym umfaßt.

11. Verfahren nach einem der Ansprüche 8 bis 10, dadurch gekennzeichnet, daß das Enzym oder die Enzyme, die die Polysaccharide abbauen, aus den Enzymen ausgewählt werden, die Cellulose, Hemicellulose und Pektine abbauen.

12. Verfahren nach einem der Ansprüche 8 bis 11, dadurch gekennzeichnet, daß man auf die Stufe der enzymatischen Hydrolyse eine Stufe der Trockung der hydrolysierten Suspension folgen läßt.

13. Wäßrige Suspension aus feinzerteilten Sojabohnen, in die die Gesamtheit der Bestandteile der geschälten Bohnen eingearbeitet ist, dadurch gekennzeichnet, daß 50% der Teilchen eine Größe von weniger als 60 µm und 90% der Teilchen eine Größe von weniger als 90 µm aufweisen, wobei diese Suspension nach dem Verfahren gemäß Anspruch 1 erhältlich ist.

14. Feinzerteiltes Sojabohnenpulver, in das die Gesamtheit der Bestandteile der geschälten Bohnen eingearbeitet ist, dadurch gekennzeichnet, daß nach der Rekonstituierung in Wasser 50% der Teilchen eine Größe von weniger als 60 µm und 90% der Teilchen eine Größe von weniger als 90 µm aufweisen, wobei das Pulver nach dem Verfahren gemäß Anspruch 1 erhältlich ist.

15. Verwendung der wäßrigen Suspension nach Anspruch 13 in Yoghurts, Eiscremes, Getränken.

16. Verwendung des Sojabohnenpulvers nach Anspruch 14 in Yoghurts, Eiscremes, Getränken.

17. Verfahren zur Herstellung eines feinzerteilten Sojabohnenprodukts, ausgehend von Sojabohnenbrei, bei dem man diesen Brei thermisch bei einer Temperatur oberhalb von 148°C behandelt, wobei die Mindestzeitdauer beim Einhalten einer Temperatur von 148°C 30 s beträgt und die Mindestzeitdauer beim Einhalten von höheren Temperaturen kürzer ist, und bei dem man diesen Brei sofort durch ein Gegendruckventil hindurchleitet.
